# FASCICULE DE BREVET EUROPEEN

(11) **EP 3 041 699 B1**
(45) Date de publication et mention de la délivrance du brevet: **14.03.2018**
(21) Numéro de dépôt: 14777687.6
(22) Date de dépôt: 02.09.2014
(51) Int. Cl.: B62K 5/10, B60G 3/20, B62K 5/027, B62K 5/05, B62K 5/08, B62K 5/00

(54) **VÉHICULE INCLINABLE À TROIS ROUES**
DREIRÄDRIGES NEIGEFAHRZEUG
THREE-WHEELED TILTING VEHICLE

(30) Priorité: 02.09.2013 FR 1358375
(43) Date de publication de la demande: 13.07.2016
(73) Titulaire: Malphettes, Bruno, 78110 Le Vesinet (FR)
(72) Inventeur: Malphettes, Bruno, 78110 Le Vesinet (FR)
(74) Mandataire: IP Trust
(86) Numéro de dépôt international: PCT/FR2014/052165
(87) Numéro de publication internationale: WO 2015/028767

(56) Documents cités:
- WO-A1-2011/005945
- CA-A1- 2 652 789
- JP-A- S61 229 608
- US-A1- 2005 206 101
- US-A1- 2008 197 597
- US-B1- 7 648 148

## Description

### Domaine de l'invention

La présente invention concerne le domaine des véhicules inclinables à trois roues, tels que les scooters, présentant deux roues avant directrices parallèles entre elles et inclinables par rapport au sol, avec le châssis.

Ces véhicules permettent de concilier la maniabilité d'un scooter avec la sécurité qu'apporte une meilleure adhérence au sol et la stabilité résultant d'une voie inexistante sur un deux-roues.

### Etat de la technique

On connaît dans l'état de la technique de nombreuses solutions d'engins motorisés à deux roues avant jumelées.

A titre d'exemple, la demande internationale WO200357549 décrit un ensemble de roues orientables à inclinaison induite, qui présente une paire de porte-moyeux de roue parallèles, placés de chaque côté d'une arête de châssis inclinable. Un système de barres triangulées articulées et une transmission connectent les porte-moyeux de roue à l'arête de châssis, de façon que les roues s'inclinent en restant parallèles au châssis dans les virages à l'unisson avec l'arête de châssis. Un mécanisme de direction couple les porte-moyeux de roue à l'arête de châssis, de façon qu'une inclinaison induite sur l'arête de châssis dirige les porte-moyeux de roue selon un angle de direction qui dépend de l'angle de l'inclinaison induite.

La demande de brevet européen EP251906 décrit un dispositif stabilisateur pour véhicule inclinable constitué par une partie primaire déformable liée au sol dans laquelle un élément porteur tourne autour d'un élément lors de l'inclinaison du véhicule, et un élément porté lié à une partie secondaire mobile par rapport à la partie primaire est soulevé lors de cette inclinaison grâce à un système multiplicateur de rotation agissant sur un bras porteur, de façon que le centre de gravité G de l'ensemble du véhicule soit lui-même soulevé au cours d'un tel mouvement d'inclinaison, ce qui assure la stabilité du véhicule.

La demande internationale WO201105945 décrit un autre exemple de véhicule inclinable comprend un châssis qui pivote par rapport à un élément de châssis pivotant autour d'un axe de pivot. Un couple exercé sur un ensemble de direction dans une première direction amène le châssis à pivoter par rapport à l'élément de châssis pivotant dans une seconde direction opposée au moins lorsque la vitesse du véhicule est supérieure à une première vitesse seuil pour diriger le véhicule dans la seconde direction. Un actionneur sollicite le châssis en direction d'une position verticale lorsque le châssis est dans une position inclinée et qu'une vitesse du véhicule est inférieure à une seconde valeur seuil. L'invention concerne également un procédé selon lequel un couple est exercé sur le châssis dans la direction opposée au couple de direction lorsque la vitesse est supérieure à la première vitesse seuil. Le couple exercé par l'actionneur est inverse à l'angle d'inclinaison lorsque la vitesse de déplacement est inférieure à la seconde vitesse seuil.

La demande internationale WO2007127783 décrit un véhicule qui comprend une carrosserie de véhicule et un ensemble support de véhicule. La carrosserie du véhicule a un axe longitudinal et est configurée pour porter un pilote sur elle. L'ensemble support comprend une première et une seconde roues inclinables disposées chacune en un emplacement latéral différent par rapport à l'axe longitudinal, un mécanisme d'inclinaison associant la carrosserie du véhicule en la soutenant à partir des roues inclinables pour permettre à la carrosserie du véhicule de s'incliner dans une première plage d'inclinaison par rapport à la surface sur laquelle sont disposées les roues inclinables et un limiteur d'inclinaison associé de façon fonctionnelle au mécanisme d'inclinaison pour limiter l'inclinaison de la carrosserie du véhicule à une valeur inférieure à la première plage d'inclinaison, limiteur que l'on peut désactiver pour permettre une inclinaison dans toute la première plage d'inclinaison.

La demande internationale WO200551689 concerne un châssis de véhicule à système basculant, qui comporte un engrenage différentiel entraînant des demi-arbres opposés. Chaque demi arbre est relié à un moyeu de roue respectif. Des biellettes de connexion pivotantes sont prévues entre le châssis et les moyeux ; et un bras de commande, prévu entre le châssis et la tête de pont, permet de limiter le déplacement de celle-ci. Ce dispositif constitue une nouvelle conception de véhicule à système basculant doté d'une transmission par arbre et d'un centre de gravité bas.

La demande internationale WO200502957 se rapporte à un véhicule à trois roues, qui comprend un châssis avec moteur, engrenage d'entraînement et au moins une roue menée à l'arrière, et deux roues avant utilisées en partie pour diriger le véhicule. Ce véhicule peut également être dirigé de telle sorte que le châssis avec le moteur, l'engrenage d'entraînement et la roue arrière menée peut être inclinée sur le côté pour virer à la façon d'un motocycle. Cette invention concerne en particulier une conception de véhicule qui contribue à déplacer le centre de gravité, lorsqu'un tel véhicule est incliné sur le côté, pour qu'il soit notamment plus facile de le redresser. Cette invention permet en outre de modifier et de déterminer les caractéristiques de conduite du véhicule en faisant varier différents paramètres de conception, tout en restant dans le domaine couvert par la présente invention. Cette invention concerne également une conception spéciale permettant de monter des repose-pieds sur lesquels le conducteur du véhicule peut placer ses pieds en conduisant le véhicule. Cette conception spéciale contribue activement à modifier la géométrie entre les repose-pieds et le châssis du véhicule, lors de l'utilisation du véhicule et notamment lorsqu'il est incliné sur le côté pour virer.

Le brevet américain US7530419 décrit un autre exemple de véhicule à trois roues, constitué par un châssis avec moteur, engrenage d'entraînement et au moins une roue menée à l'arrière, et deux roues avant utilisées en partie pour diriger le véhicule. Ce véhicule peut également être dirigé de telle sorte que le châssis avec le moteur, l'engrenage d'entraînement et la roue arrière menée peut être inclinée sur le côté pour virer à la façon d'un motocycle. Cette invention concerne en particulier une conception de véhicule qui contribue à déplacer le centre de gravité, lorsqu'un tel véhicule est incliné sur le côté, pour qu'il soit notamment plus facile de le redresser. Cette invention permet en outre de modifier et de déterminer les caractéristiques de conduite du véhicule en faisant varier différents paramètres de conception, tout en restant dans le domaine couvert par la présente invention.

La demande de brevet américaine US20110215544 décrit une variante d'un véhicule à trois roues, une roue gauche ayant un premier axe de rotation, la roue gauche couplé mécaniquement à la base sur le côté gauche de l'axe longitudinal avec un mécanisme de suspension indépendant gauche qui sollicite la roue gauche contre la route sur une plage de mouvement vertical de la roue gauche, une première dimension du mécanisme gauche variant en réponse au mouvement vertical de la roue gauche. La roue droite ayant un second axe de rotation, la roue droite couplé mécaniquement à la base sur la droite de l'axe longitudinal avec un mécanisme de suspension indépendant droit qui sollicite la roue droite contre la route sur une plage de mouvement vertical de la roue droite, une seconde dimension de la droite mécanisme de variation en réponse au mouvement vertical de la roue droite.

Le brevet américain US7648148 décrit un véhicule comprend un châssis ayant une partie avant et une partie arrière. Un élément de châssis pivotant est relié de manière pivotante au châssis autour d'un axe généralement horizontal de pivotement. Le châssis peut pivoter par rapport à l'élément de cadre peut pivoter entre une position verticale et une pluralité de positions penchées. Ensemble de direction est supporté par le cadre pour diriger le véhicule. Dispositif d'actionnement a une première partie raccordée au châssis et une seconde partie reliée à l'élément pivotant du châssis. L'actionneur fonctionne de façon à pivoter de manière sélective le cadre par rapport à un angle de référence autour de l'axe de pivotement. Le procédé comprend: la détermination d'un couple de direction exercé sur l'ensemble de direction, la détermination d'une vitesse de déplacement du véhicule, déterminer un angle d'inclinaison de la monture par rapport à l'élément pivotant du châssis, et en exerçant un couple de serrage s'appuyant sur le rapport de trame au pivotant élément de cadre autour de l'axe de pivotement dans une première direction en utilisant l'actionneur en réponse à un couple de direction exercé sur l'ensemble de direction dans un second sens opposé au premier sens lorsque la vitesse de déplacement est supérieure à une vitesse de seuil, ce qui provoque le véhicule à tourner à la première direction.

Le brevet américain US8419027 décrit un autre système de direction pour un véhicule comprenant un cadre ayant un tube de direction, une tige de commande s'étendant en rotation à travers le tube de direction, une unité inclinable disposée sur le tube de direction, deux unités de suspension raccordées à et disposées partiellement sous l'unité inclinable, et deux roues avant raccordées respectivement aux unités de suspension. L'unité inclinable comprend deux tubes latéraux flanquant le tube de direction. Les unités de suspension s'étendent respectivement dans les deux tubes latéraux.

Le brevet canadien 2 652 789 divulgue un véhicule ayant les caractéristiques du préambule de la revendication 1, ce véhicule à trois roues étant pourvu d'un raccord courbé commun aux deux bras de suspension qui demeure dans une position horizontale par rapport à la route et dont l'orientation demeure parallèle par rapport au sol lors de la rotation du châssis et des roues du véhicule, pour servir de guidage à un engrenage commandé en rotation par un moteur électrique recevant un signal indicatif du virage pris par le véhicule pris en compte pour quantifier la rotation de l'engrenage. La rotation de l'engrenage guidé par le raccord entraîne celle d'un contrôleur d'inclinaison fixé par rapport à un point de pivot au véhicule, et une inclinaison du châssis et des roues afin de s'incliner lors d'un virage, augmentant ainsi la stabilité du véhicule, même à haute vitesse.

Cependant, dans ce véhicule, aucun dispositif n'est prévu pour au contraire s'opposer à l'inclinaison du véhicule en cas de basculement inopportun du véhicule à faible vitesse ou à l'arrêt.

### Inconvénients de l'art antérieur

Les solutions de l'art antérieur présentent un premier inconvénient relatif à la maîtrise de l'inclinaison à l'arrêt. Dans ce cas, aucune force centrifuge ne compense la composante transversale, et le poids de l'engin a tendance à amplifier l'inclinaison dès qu'il commence à pencher.

Lorsque l'engin est lourd, sa maîtrise à l'arrêt ou lors des manoeuvres à très petite vitesse peut s'avérer problématique, notamment pour un utilisateur néophyte et peu musclé. Le poids de certains engins dépasse 200 kg, et il devient alors très difficile d'empêcher le basculement et la chute de l'engin lorsque l'inclinaison dépasse par inadvertance un angle significatif. Le relevage de l'engin est alors parfois tout simplement impossible pour une personne sans aide.

Un deuxième inconvénient concerne le poids des mécanismes mis en oeuvre pour l'articulation des roues avant. Ce poids constitue une masse non suspendue préjudiciable aux qualités dynamiques et au confort de l'engin.

Ce poids peut également pénaliser les performances (consommation, accélération, vitesse maximale) d'un engin lorsque la motorisation est de faible cylindrée, par exemple 50 cm².

### Solution apportée par l'invention

La présente invention vise à remédier à ces inconvénients en proposant un système d'articulation des roues jumelées d'un engin basculant simple et fiable, offrant une solution de basculement des suspensions, permettant un travail de celles ci toujours dans une géométrie de fonctionnement optimale. Cette solution produit aussi un couple de rappel s'opposant à l'amplification de l'angle en cas de basculement inopportun à l'arrêt ou à faible vitesse.

A cet effet, l'invention concerne selon son acception la plus générale un véhicule inclinable présentant un train avant basculant, comportant un double parallélogramme reliant les deux roues avant au châssis, et deux amortisseurs associés à des ressorts de suspension reliant chacun l'un des bras de suspension ou l'une des biellettes de l'un des parallélogrammes déformables à une platine de liaison commune. Selon l'invention, ladite platine de liaison est mobile en translation le long d'un arc solidaire du châssis et guidant la platine de liaison selon une trajectoire prédéfinie pour produire un couple de rappel s'opposant à une amplification de l'angle d'inclinaison du véhicule en cas de basculement inopportun à l'arrêt ou à faible vitesse du véhicule.

On entendra par « platine de liaison » au sens du présent brevet la pièce mobile, se déplaçant suivant la trajectoire imposée par l'arc solidaire du châssis, et sur laquelle sont articulées les extrémités supérieures des deux amortisseurs. Le déplacement de la platine par rapport à l'arc est imposée par les efforts respectifs exercés par les deux amortisseurs, et dépendent de l'inclinaison du véhicule par rapport au plan longitudinal vertical du châssis.

On entendra par « arc » une pièce fixe, solidaire du châssis, assurant le guidage contraint de la platine de liaison. Cet « arc » peut être un rail, une pluralité de rails, un profilé, ou toute autre configuration permettant d'assurer un guidage de la platine de liaison selon une trajectoire prédéfinie. Cet arc est symétrique par rapport au plan longitudinal vertical du châssis du véhicule, et présente de part et d'autre de ce plan deux branches incurvées.

Le déplacement de la platine de liaison/du chariot décrit une trajectoire non contrainte par un cercle au rayon supérieur à celle de l'arc, la contrainte résultant de fait agit sur les suspensions lors du balancement".

Selon une variante, ledit arc présente un rayon de courbure décroissant vers chacune des extrémités.

Selon une autre variante, ladite platine de liaison présente un chariot de guidage complémentaire d'un chemin de guidage prévu sur ledit arc. Avantageusement, ledit arc présente un rayon de courbure décroissant vers chacune des extrémités.

Avantageusement, ledit chariot de guidage présente deux galets latéraux complémentaires du chemin de guidage et deux galets disposés radialement par rapport à l'arc.

Selon un mode de réalisation particulier, les extrémités dudit arc de guidage sont reliées au châssis par des bras de liaison définissant une fenêtre pour le passage des amortisseurs.

Selon une variante particulière, le véhicule comporte un moyen de blocage du déplacement relatif de ladite platine par rapport audit arc.

Avantageusement, ledit moyen de blocage comporte une mâchoire crantée en forme de lune, actionnée par un câble.

Selon une autre variante particulière, la colonne de direction présente une forme coudée, avec une extrémité articulée par rapport au double parallélogramme coaxial avec l'extrémité supérieure de la colonne de direction.

Selon une variante, le véhicule comporte un moyen de blocage actionné par une liaison mécanique reliée à moyen d'actionnement d'un organe mécanique commandé par le conducteur.

Selon une variante, le véhicule comporte un moyen additionnel de rétention de l'inclinaison, comportant deux chariots coulissant sur la partie supérieure de l'arc, de part et d'autre, à la fois, de l'axe central vertical que constitue l'arête du châssis, mais aussi du chariot mobile relié aux suspensions. Ces deux chariots sont reliés entre eux par un ou plusieurs ressorts.

Selon une autre variante, ladite platine de liaison présente un chariot de guidage complémentaire d'un chemin de guidage prévu sur ledit arc.

Avantageusement, ledit chariot de guidage présente quatre ou plus, galets latéraux, d'un diamètre inférieur, montés sur le même axe que les galets principaux, complémentaires de 2 chemins de guidage inférieurs positionnés à l'inverse du chemin de guidage principal supérieur et deux galets disposés radialement par rapport à l'arc.

Selon un mode de réalisation particulier, l'arc est maintenu par une construction composée de deux plaques perpendiculaires transpercées par les tubes poutres qui prolongent le châssis.

Selon une variante particulière, le véhicule comporte un moyen de blocage du déplacement relatif de ladite platine par rapport audit arc, actionné par une liaison mécanique commandée par le conducteur.

Avantageusement, ledit moyen de blocage consiste en une, ou plusieurs, gâchette crantée , actionnée par un mécanisme, venant mordre la partie du chariot de guidage, également composée d'une ou plusieurs plaques crantées.

Description d'un mode de réalisation non limitatif de l'invention

L'invention sera mieux comprise à la lecture de la description qui suit, se référant aux dessins annexés illustrant un exemple non limitatif de réalisation, où:
- la figure 1 représente une vue schématique de face de la liaison entre le châssis et les roues
- les figures 2 et 3 représentent des vues de face du scooter, respectivement en position droite et en position inclinée

- la figure 4 représente une vue de détail du système d'articulation des roues avant basculantes
- la figure 5 représente une vue en détail des moyens de blocage et de rétention de l'inclinaison
- la figure 6A représente une vue de l'arc et de la platine de guidage
- la figure 6B représente une vue de l'arc creux et de la platine de guidage
- la figure 7 représente une vue d'un système de blocage de la platine, en position de repos
- les figures 8 et 9 représentent des vues en perspective et de face du châssis
- la figure 10 représente une variante de réalisation du rail de guidage.

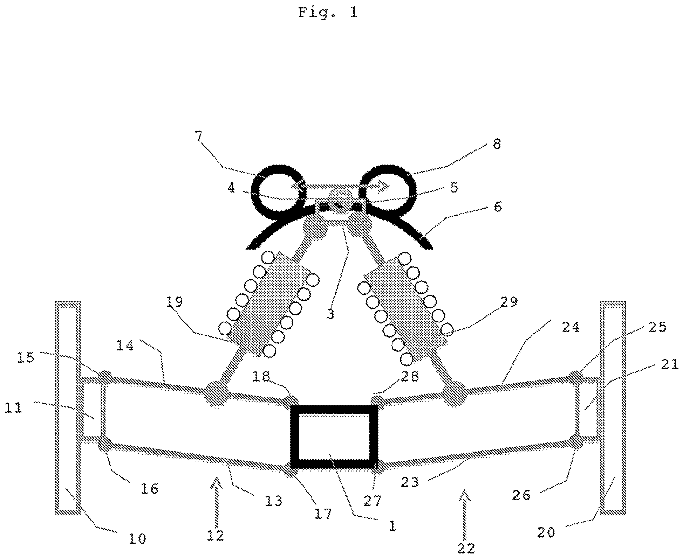

Les figures 1 à 4 représentent une vue schématique du système d'articulation des roues avant basculantes.

Le châssis (1,8) s'étend de façon longitudinale par rapport à l'engin et supporte les différents organes (moteur, colonne de direction (40), assise du conducteur, le support de roue arrière, le plancher, une ou plusieurs béquilles,). Les deux roues avant (10, 20) sont directrices et basculantes. Elles sont montées de façon connue sur des fusées (11, 21) reliées au châssis (1) par des parallélogrammes déformables respectivement (12, 22). Ces parallélogrammes (12, 22) déformables présentent chacun une biellette (ou bras de suspension) inférieure (13, 23) et une biellette (ou bras de suspension) supérieure (14, 24). Ces biellettes (14, 24; 13, 23) sont articulées respectivement par rapport aux porte-fusées (11, 21) et au châssis (1) par des rotules (15, 16, 25, 26; 17, 18; 27, 28).

Le train avant est suspendu par deux suspensions ressorts/ amortisseurs (19, 29) reliées chacune par une rotule au bras de suspension supérieur respectivement (14, 24). L'autre extrémité des amortisseurs (19, 29) est reliée à une platine commune (3) par des articulations.

Cette platine est solidaire (ou forme une pièce unique) avec un chariot mobile (5) dont le déplacement est contraint par un rail arqué (6) placé dans le plan transversal, et symétrique par rapport au plan sagittal, l'intersection du plan transversal et du plan sagittal définissant l'axe d'inclinaison du châssis par rapport à la verticale.

Ce rail arqué (6) est solidaire du châssis auquel il est lié par une liaison au niveau du rail et par des éléments du châssis (7, 8) reliant le rail arqué (6) au châssis (1).

Le guidage du chariot mobile (5) par rapport au rail arqué (6) est assuré par des galets disposés sous le rail (6). Ces galets limitent les degrés de libertés entre le chariot (5) et le rail (6), afin que le seul déplacement possible soit déterminé par le profil du rail (6). Ce profil détermine une courbe symétrique par rapport au plan sagittal.

Lorsque la décroissance du rayon de courbure est importante, le couple de rappel augmente. La variation du rayon de courbure peut être continue ou variable afin de moduler l'effet de rappel entre des faibles basculements, ne nécessitant pas un couple de rappel important, et les forts basculements, où un couple de rappel plus élevé est recherché.

Un mécanisme de blocage (4) est prévu pour assurer le verrouillage du chariot (5) par rapport au rail (6), en position centrale, pour assurer une stabilité statique et empêche le basculement inopportun lorsque l'engin est à l'arrêt, notamment en stationnement. Ce mécanisme de blocage (4) peut être commandé mécaniquement, électriquement ou de manière hydraulique.

Ce mécanisme de blocage (4) peut aussi être actionné par une commande mécanique ou électrique, pour permettre à l'utilisateur de stabiliser l'engin en arrêt provisoire, par exemple à un feu de circulation, ou à basse vitesse.

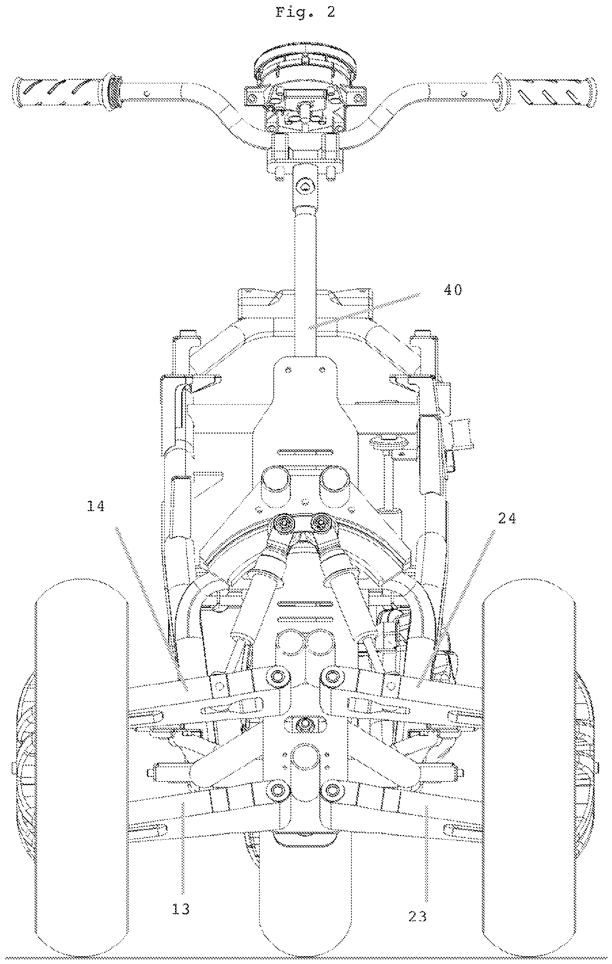

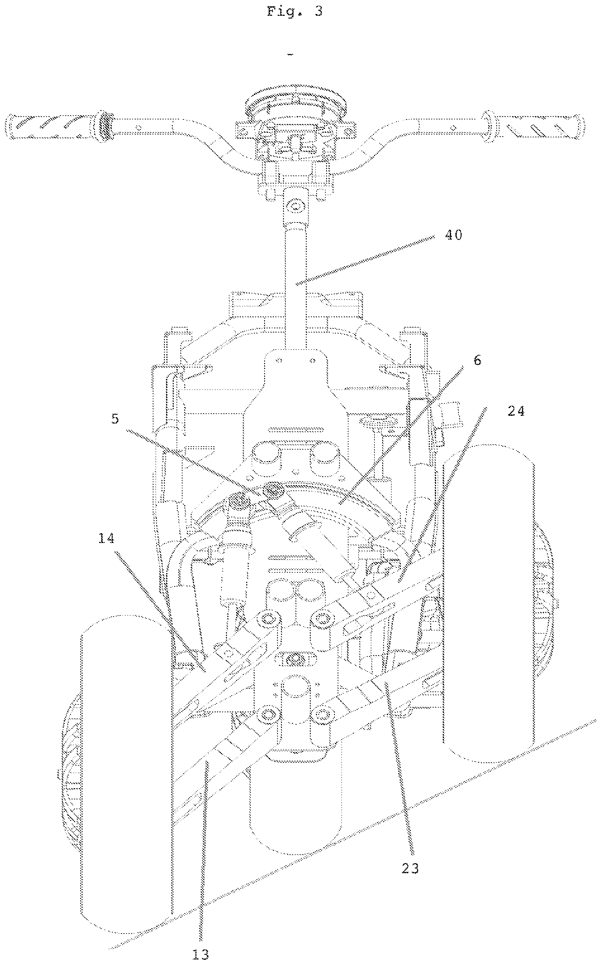

Les figures 2 et 3 illustrent la modification de la géométrie du système d'articulation des roues avant basculantes lorsque le scooter passe d'une situation d'équilibre (figure 2) à une situation inclinée (figure 3).

La biellette inférieure (13) et la biellette supérieure (14) forment un premier parallélogramme déformable avec la platine de montage de la roue avant droite.

La biellette inférieure (23) et la biellette supérieure (24) forment un deuxième parallélogramme déformable avec la platine de montage de la roue avant gauche.

Ces deux parallélogrammes déformables sont symétriques par rapport au plan vertical médian lorsque le scooter est en équilibre, comme représenté en figure 2. Lorsque le scooter est incliné, ces deux parallélogrammes se déforment avec une cinématique qui est contrainte par le déplacement du chariot (5) se déplaçant sur le rail (6).

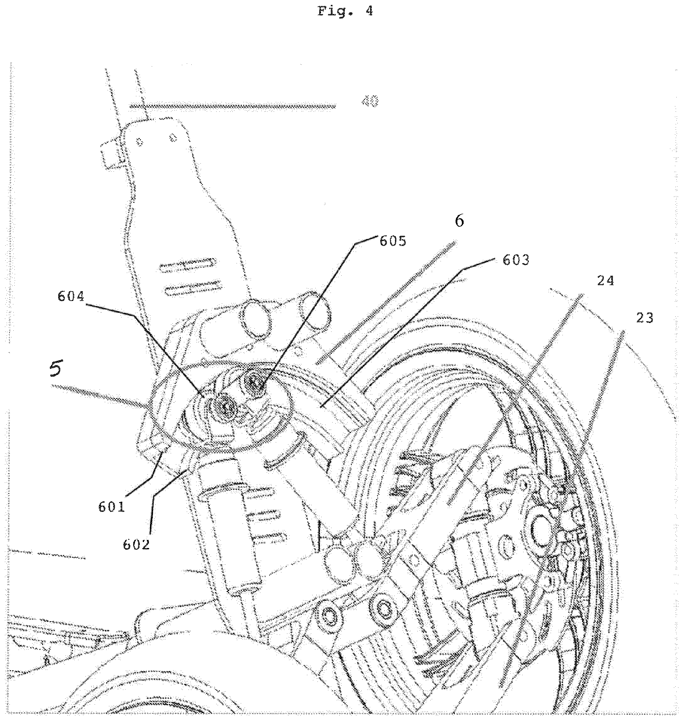

La figure 4 illustre plus en détail le système de guidage lorsque le véhicule est en inclinaison. L'arc de guidage (6) présente un chemin de guidage délimité par une surface supérieure (601) arquée et une surface inférieure (602) arquée définissant entre elles une espace (603) arqué dans lequel se déplace la platine (3). La platine (3) présente des galets (604, 605) assurant le guidage par roulement sur les surfaces arquées (601, 602).

Optionnellement, un système composé de deux chariots latéraux placés de part et d'autre du chariot central et reliés par des ressorts accompagne le retour à la position haute droite. Ce système complète voire remplace la forme d'arrondi non régulier du rail de guidage (6). Par ailleurs, un dispositif de blocage du chariot (5) par rapport au rail (6), formé par mâchoire arrondie dentelée assure le blocage du chariot,et la position de balancement du scooter, avec possibilité de bloquer à convenance (de + 10 à - 10°.) Cette solution évite ou complète le blocage par la béquille.

Ce système est couplé, soit avec un capteur de contact relié au boitier électronique, empêchant le démarrage du moteur ou limitant les tours moteurs, à un régime ralenti pour interdire de prendre de la vitesse avec le système de blocage enclenché, soit relié à un câble ou autre mécanisme d'actionnement de frein de parking pour interdire tout mouvement du véhicule.

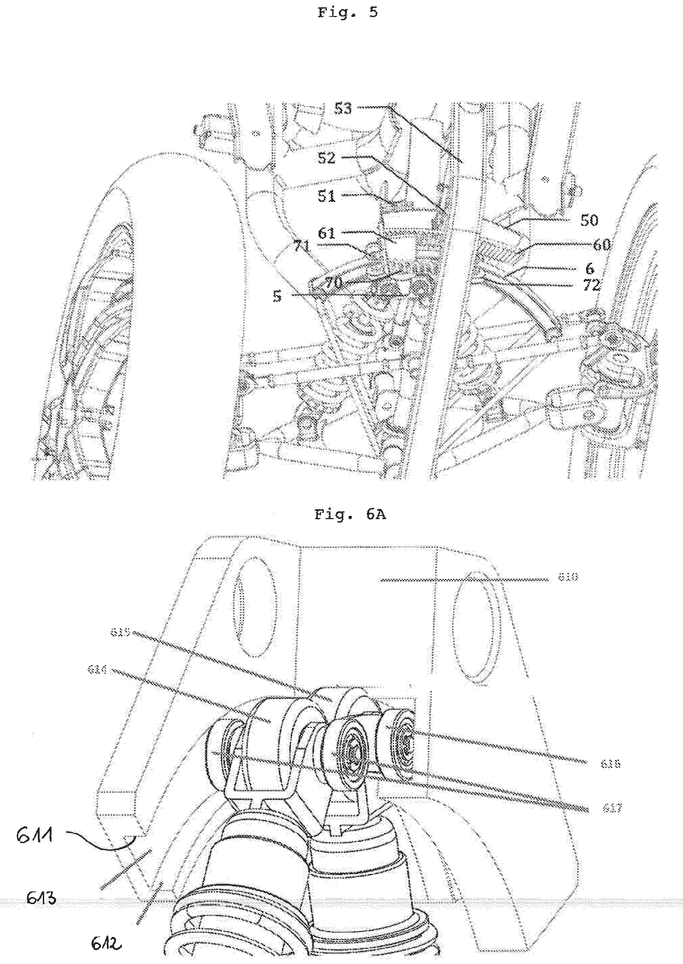

La figure 5 représente une vue en détail des moyens de blocage de l'inclinaison.

Les moyens de blocage sont constitués par deux parties mobiles (50, 60) et deux parties fixes (51, 61).

Les parties mobiles (50, 60) sont constituées par deux plaques crantées (50, 60) arquées avec un rayon de courbure conforme au rayon de courbure de l'arc (6). Les dents sont orientées vers l'extérieur.

Un système d'écartement (52) est disposé entre les deux parties mobiles (50, 60) et fixé sur le cadre (53). Ce système est commandé par une liaison mécanique par un câble relié à une commande manuelle.

Lorsque le système d'écartement (52) est activé, il repousse les deux parties mobiles (50, 60) vers l'extérieur, jusqu'à ce qu'elles viennent s'engrener avec les deux parties fixes également crantées, elles vers l'intérieur, (51, 61) solidaires de la platine de guidage (3). Dans cette position, les deux parties mobiles (50, 60) coopèrent avec les parties fixes (51, 61) pour empêcher le déplacement relatif de la platine de guidage (3) par rapport à l'arc (6) et par conséquence par rapport au châssis (53). Elles empêchent ainsi la modification de l'inclinaison du véhicule.

Les parties mobiles (50, 60) présentent une extension limitée, inférieure à l'extension de l'arc (6) car le blocage du déplacement n'est utile que pour une course limitée centrée autour de la position verticale.

Sur cette vue, est également représentée un ressort de rappel (70) qui s'étend entre une butée (71) solidaire du premier chariot latéral, venant s'appuyer sur la butée haute du chariot central (61), et une butée opposée venant au contact du châssis (53) lorsque l'angle d'inclinaison dépasse une valeur de référence. Cette deuxième butée est montée sur un deuxième chariot (72) positionné également sur l'arc (6) symétriquement par rapport à l'axe central du châssis.

Ainsi, lorsque l'inclinaison continue à augmenter, le ressort (70) exercera une force de rappel additionnelle, tendant à redresser le véhicule.

Symétriquement, lorsque l'inclinaison change de côté, c'est la première butée (71) qui vient en contact avec le châssis, et la seconde butée (72) qui agit sur la butée haute du chariot central (61) pour exercer une force de rappel.

Bien entendu, le véhicule peut comporter deux (ou plus) ressorts de rappel, disposés symétriquement par rapport au plan longitudinal.

Les chariots latéraux (71, 72), présentent chacun des galets latéraux et un galet reposant sur la partie supérieure de l'arc.

### Arc creux

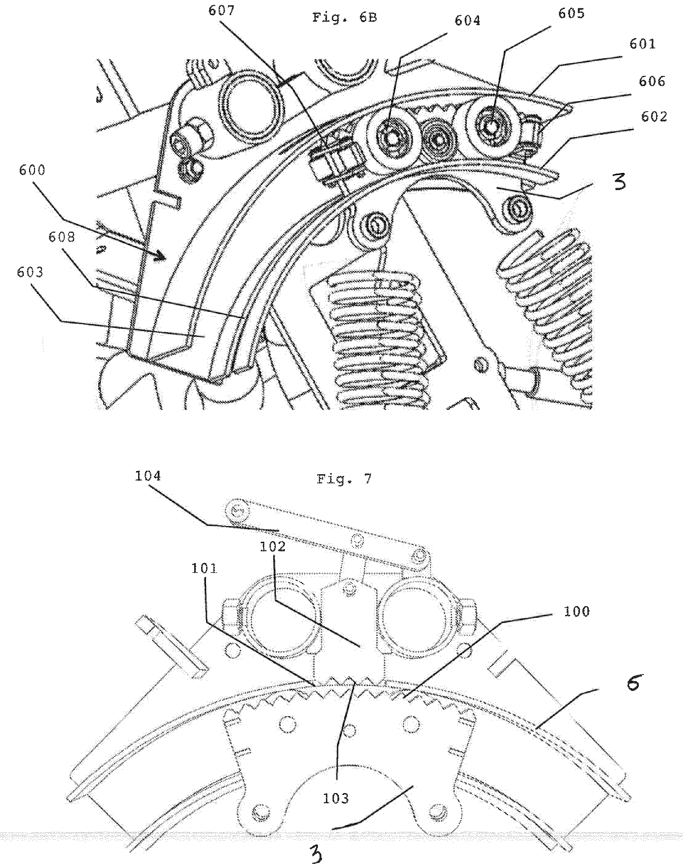

La figure 6B représente une vue d'une variante de réalisation du système de guidage de la platine (3). Le système de guidage (600) est formé par un profil arqué, présentant un chemin de guidage supérieur (601) et un chemin de guidage inférieur (602) arqués et parallèle entre eux, réunis par une surface arrière plane (603) et par une surface avant parallèle.

La platine (3) supporte deux galets (604, 605) venant en appui avec l'un au moins des chemins de guidage (602, 601) pour assurer le guidage de la platine (3) selon une trajectoire incurvée. La platine présente également deux séries de galets (606, 607) assurant la stabilité dans le plan vertical. Le chemin inférieur (602) présente une fente (608) pour le passage de la platine (3).

La figure 6A représente une vue d'une autre variante de réalisation du système de guidage de la platine (3). Le système de guidage (610) est formé par un profil arqué, présentant un chemin de guidage supérieur (611) et un chemin de guidage inférieur (612) arqués et parallèle entre eux, réunis par une surface arrière plane (613) et par une surface avant parallèle.

La platine (3) supporte deux galets (614, 615) assurant la stabilité dans le plan vertical. La platine présente également deux séries de galets (616, 617) venant en appui avec l'un au moins des chemins de guidage (612, 611) pour assurer le guidage de la platine (3) selon une trajectoire incurvée. Le chemin inférieur (612) présente une fente pour le passage de la platine (3). Cette variante permet d'avoir un contrôle du chariot dans les trois dimensions en ayant les trois roulements sur deux axes. Ces deux axes servant de points de contact aux deux combinés amortisseurs / suspensions.

### Système de blocage

La figure 7 représente une vue d'un système de blocage de la platine, en position de repos.

La platine (3) présente sur sa tranche supérieure (100) au moins une zone dentée. L'arc (6) solidaire du châssis présente au moins une fenêtre (101) pour le passage d'un pêne (102) dont la surface frontale inférieure présente des dents complémentaires (103). Ce pêne (102) est actionné par un levier (104) et maintenu en position désengagée, au repos, par un ressort de rappel.

Le levier (104) est actionné par l'utilisateur pour bloquer le basculement de l'engin en position verticale. L'actionnement peut être combiné au frein de parking et au blocage de la direction. L'antivol assure le verrouillage du levier (104).

### Solution optionnelle de construction du châssis

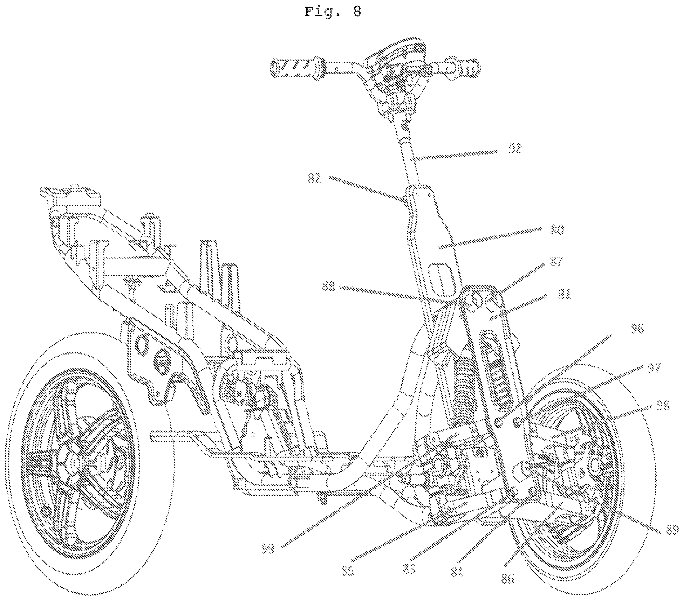

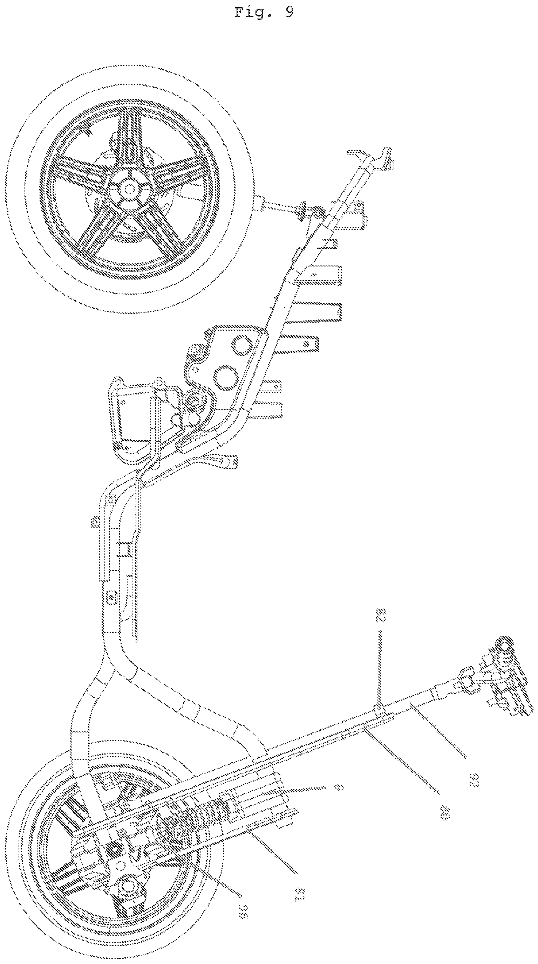

Les figures 8 et 9 représentent des vues en perspective et de face d'un châssis pour tricycle, constitué par un ensemble mécano-soudé et présentant à sa partie avant un cadre rigide formé de deux plaques transversales (80, 81). La plaque avant (80) s'étend entre une bague supérieure (82) de guidage de la colonne de direction (92) et les axes (83, 84) des bras de suspension inférieurs (85, 86).

Les axes (96, 97) des bras de suspension supérieurs (98, 99) sont également fixés entre les deux plaques transversales (80, 81).

Cette plaque avant (81) est solidarisée avec la plaque arrière (80) par l'intermédiaire des tubes (87, 88, 89) prolongeant l'ensemble mécanosoudé.

L'arc de guidage (6) est formé par un corps arqué présentant des surfaces intérieures de guidage de la platine (3).

Le volume disponible entre les deux plaques (80, 81) contient le dispositif de guidage, (éventuellement) la colonne de direction (92) et le système de blocage de l'arc de guidage. Il peut également contenir d'autres composants mécaniques ou électriques.

### Alternative de rail de guidage

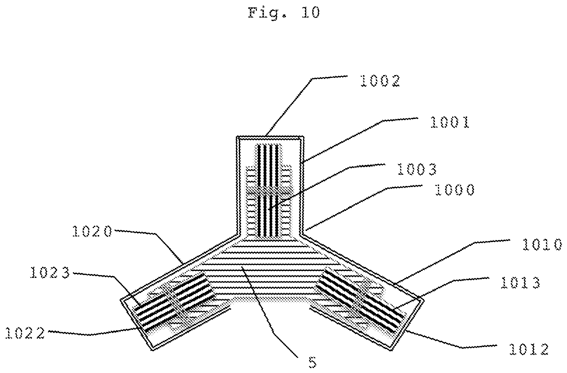

La figure 10 représente une vue en coupe d'une variante de réalisation du rail de guidage (1000) solidaire du châssis et présentant trois lobes : un lobe supérieur (1001) dont le fond (1002) présente une forme de tuile dont le centre de rotation est parallèle à l'axe longitudinal du véhicule. Un premier galet (1003) vient en appui sur le fond (1002) de ce premier lobe (1001).

Le rail de guidage (1000) présente deux lobes latéraux (1010, 1020) s'étendant avec un angle d'environ 135° de part et d'autre du lobe supérieur (1001).

Dans chacun de ses lobes latéraux (1010, 1020), un galet respectivement (1013, 1023) vient en appui sur un fond (1012, 1022).

Le chariot (5) est formé par une pièce supportant les trois galets (1002, 1012 et 1022) assurant son positionnement à l'intérieur de la structure de guidage (1000) et la liaison avec le système de suspension, venant se fixer sur la partie inférieure du chariot (5).

## Revendications

1. Véhicule inclinable présentant un train avant basculant, comportant un double parallélogramme déformable (12, 22) reliant les deux roues (10, 20) avant au châssis (1,8), et deux amortisseurs (19, 29) associés à des ressorts de suspension, reliant chacun l'un des bras de suspension, ou l'une des biellettes (13, 23, 14, 24) de l'un des parallélogrammes déformables à une platine de liaison commune (3), **caractérise en ce que** ladite platine de liaison (3) est mobile en translation le long d'un arc (6) solidaire du châssis (1,8) et guidant la platine de liaison (3) selon une trajectoire prédéfinie pour produire un couple de rappel s'opposant à une amplification de l'angle d'inclinaison du véhicule en cas de basculement inopportun à l'arrêt ou à faible vitesse du véhicule.

2. Véhicule inclinable selon la revendication 1 **caractérisé en ce que** ledit arc (6) est constitué par une pièce creuse liée au châssis, et présentant un chemin de guidage incurvé coopérant avec des moyens complémentaires liés à ladite platine de liaison.

3. Véhicule inclinable selon la revendication 2 **caractérisé en ce que** lesdits moyens complémentaires sont constitués par au moins deux galets pivotant librement autour d'axes perpendiculaires.

4. Véhicule inclinable selon la revendication 1 **caractérisé en ce que** ledit arc (6) est constitué par une pièce incurvée liée au châssis, et dont la surface extérieure forme un chemin de guidage incurvé coopérant avec des moyens complémentaires liés à ladite platine de liaison.

5. Véhicule inclinable selon la revendication 4 **caractérisé en ce que** lesdits moyens complémentaires sont constitués par un manchon coulissant autour de ladite pièce incurvée.

6. éhicule inclinable selon la revendication 1 **caractérisé en ce que** ledit arc (6) présente un rayon de courbure décroissant vers chacune des extrémités.

7. Véhicule inclinable selon la revendication 1 **caractérisé en ce que** ladite platine de liaison (3) est solidaire d'un chariot de guidage (5) complémentaire d'un chemin de guidage prévu sur ledit arc (6).

8. Véhicule inclinable selon la revendication 7 **caractérisé en ce que** ledit chariot (5) de guidage présente des jeux de galets latéraux complémentaires du chemin de guidage et des jeux de galets disposés radialement par rapport à l'arc (6).

9. Véhicule inclinable selon la revendication 1 **caractérisé en ce que** les extrémités dudit arc de guidage (6) sont reliées au châssis (1) par des bras de liaison (7, 8) définissant une fenêtre pour le passage des amortisseurs.

10. Véhicule selon la revendication 1, **caractérisé en ce que** l'arc (6) est formé par un profil arqué présentant un chemin de guidage supérieur (611) et un chemin de guidage inférieur (612) arqués et parallèles entre eux, réunis par une surface arrière plane (613) et par une surface avant parallèle, **en ce que** la platine (3) supporte deux galets (614, 615) assurant la stabilité dans le plan vertical et présente deux séries de galets latéraux (616, 617) venant en appui avec l'un au moins des chemins de guidage (611, 612) pour assurer le guidage de la platine (3) selon une trajectoire incurvée, et **en ce que** le chemin inférieur (612) présente une fente pour le passage de la platine (3).

11. Véhicule inclinable selon la revendication 1 **caractérisé en ce qu'**il comporte un moyen de blocage (4) du déplacement relatif de ladite platine par rapport audit arc (6).

12. Véhicule inclinable selon la revendication 11 **caractérisé en ce que** ledit moyen de blocage (4) est constitué par au moins une zone crantée de ladite platine (3), et par au moins une plaque dentée mobile entre une position de verrouillage où elle est engrenée avec ladite zone crantée, et une position de repos où elle est désengagée de ladite platine (3).

13. Véhicule inclinable selon la revendication précédente **caractérisé en ce que** ledit moyen de blocage est actionné par une liaison mécanique reliée à moyen d'actionnement d'un organe mécanique commandé par le conducteur.

14. Véhicule inclinable selon l'une au moins des revendications précédentes **caractérisé en ce qu'**il comporte des moyens de blocage constitués par deux parties mobiles (50, 60) et deux parties fixes (51, 61) et un système d'écartement (52) disposé entre les deux parties mobiles (50, 60) et fixé sur un cadre (53), pour assurer un blocage du déplacement relatif de la platine de guidage (3) par rapport à l'arc (6).

15. Véhicule inclinable selon l'une au moins des revendications précédentes **caractérisé en ce que** le châssis présente à sa partie avant deux plaques transversales (80, 81) ou structures tubulaires, parallèles entre elles et à une colonne de direction (92), les axes des bras de suspension étant montés entre lesdites deux plaques ou structures tubulaires.

16. Véhicule inclinable selon la revendication précédente et la revendication 2 **caractérisé en ce que** ledit chemin de guidage est solidaire desdites plaques.

17. Véhicule inclinable selon la revendication 1 **caractérisé en ce que** l'arc (1000) solidaire du châssis présente trois lobes dont un lobe supérieur (1001) dont le fond (1002) présente une forme de tuile dont le centre de rotation est parallèle à l'axe longitudinal du véhicule, deux lobes latéraux (1010, 1020) s'étendant avec un angle d'environ 135° de part et d'autre du lobe supérieur (1001), un premier galet (1003) venant en appui sur le fond (1002) du lobe supérieur (1001) et deux autres galets (1013, 1023) venant en appui respectivement sur chacun des fonds respectifs (1012, 1022) des lobes latéraux (1010, 1020), un chariot (5) étant formé par une pièce supportant les trois galets (1003, 1013, 1023) assurant son positionnement à l'intérieur de l'arc de guidage (1000) et la liaison avec le système de suspension venant se fixer sur la partie inférieure dudit chariot (5).

## Patentansprüche

1. Neigbares Fahrzeug mit einer kippbaren Vorderradaufhängung mit doppeltem, verformbarem Parallelogramm (12,22), das die beiden vorderen Räder (10,20) mit dem Rahmen (1,8) verbindet, und zwei Stoßdämpfern (19, 29), die mit Aufhängefedern verbunden sind, welche einen der Querlenker oder einen der Schwingarme (13, 23, 14, 24) eines der verformbaren Parallelogramme mit einer gemeinsamen Verbindungsplatte (3) verbindet, **dadurch gekennzeichnet, dass** besagte Verbindungsplatte (3) entlang eines fest mit dem Rahmen (1,8) verbundenen Bogens (6), der die Verbindungsplatte (3) in einer vordefinierten Bahn führt, translatorisch verschiebbar ist, um ein Rückstellmoment zu erzeugen, das einer Vergrößerung des Neigungswinkel des Fahrzeugs im Falle eines unbeabsichtigten Kippens des Fahrzeugs bei Stillstand oder geringer Geschwindigkeit entgegenwirkt.

2. Neigbares Fahrzeug nach Anspruch 1, **dadurch gekennzeichnet, dass** besagter Bogen (6) aus einem hohlen Teil besteht, das mit dem Rahmen verbunden ist, und eine gekrümmte Führungsbahn aufweist, die mit komplementären, mit besagter Verbindungsplatte verbundenen Mitteln zusammen wirkt.

3. Neigbares Fahrzeug nach Anspruch 2, **dadurch gekennzeichnet, dass** besagte komplementäre Mittel aus mindestens zwei Rollen bestehen, die frei um senkrechte Achsen schwenken.

4. Neigbares Fahrzeug nach Anspruch 1, **dadurch gekennzeichnet, dass** besagter Bogen (6) aus einem gekrümmten, mit dem Rahmen verbundenen Teil besteht, dessen Außenfläche eine gekrümmte Führungsbahn bildet, die mit den mit der Verbindungsplatte verbundenen komplementären Mitteln zusammenwirkt.

5. Neigbares Fahrzeug nach Anspruch 4, **dadurch gekennzeichnet, dass** besagte Mittel aus einer Muffe bestehen, welche um das besagte gekrümmte Teil gleitet.

6. Neigbares Fahrzeug nach Anspruch 1, **dadurch gekennzeichnet, dass** besagter Bogen (6) einen Krümmungsradius aufweist, der zu beiden Enden hin kleiner wird.

7. Neigbares Fahrzeug nach Anspruch 1, **dadurch gekennzeichnet, dass** besagte Verbindungsplatte (3) fest mit einem Führungsschlitten (5) verbunden ist, der komplementär zu einer auf besagtem Bogen (6) vorgesehenen Führungsbahn ist.

8. Neigbares Fahrzeug nach Anspruch 7, **dadurch gekennzeichnet, dass** besagter Führungsschlitten (5) seitliche Rollensätze aufweist, die komplementär zur Führungsbahn sind, und Rollensätze, die radial zum Bogen (6) angeordnet sind.

9. Neigbares Fahrzeug nach Anspruch 1, **dadurch gekennzeichnet, dass** die Enden des besagten Führungsbogens (6) mit dem Rahmen (1) über Verbindungsarme (7, 8) verbunden sind, welche eine Aussparung zum Hindurchführen der Stoßdämpfer abgrenzen.

10. Fahrzeug nach Anspruch 1, **dadurch gekennzeichnet, dass** der Bogen (6) durch ein bogenförmiges Profilstück gebildet wird, das eine obere Führungsbahn (611) und eine untere Führungsbahn (612) aufweist, wobei beide gebogen sind und parallel zueinander verlaufen, und über eine hintere ebene Fläche (613) und über eine vordere parallele Fläche miteinander verbunden werden, und dadurch, dass die Platte (3) zwei Rollen (614, 615) trägt, welche die Stabilität in der vertikalen Ebene gewährleisten, und zwei Sätze seitlicher Rollen (616, 617) aufweist, welche an mindestens einer der Führungsbahnen (611, 612) anliegen, um die Führung der Platte (3) auf einer Kurvenbahn zu gewährleisten, und dadurch, dass die untere Bahn (612) einen Spalt zum Hindurchführen der Platte (3) aufweist.

11. Neigbares Fahrzeug nach Anspruch 1, **dadurch gekennzeichnet, dass** es ein Mittel zum Blockieren (4) der relativen Verschiebung der Platte in Bezug auf besagten Bogen (6) umfasst.

12. Neigbares Fahrzeug nach Anspruch 11, **dadurch gekennzeichnet, dass** besagtes Blockiermittel (4) aus mindestens einem gerippten Bereich der Platte (3) und mindestens einer gezahnten Platte besteht, die zwischen einer Verriegelungsstellung, in der sie in besagten gerippten Bereich eingreift, und einer Ruhestellung, in der sie nicht in besagte Platte (3) eingreift, bewegt werden kann.

13. Neigbares Fahrzeug nach dem vorhergehenden Anspruch, **dadurch gekennzeichnet, dass** besagtes Blockiermittel über eine mechanische Verbindung betätigt wird, die mit dem Betätigungsmittel eines vom Fahrer bedienten mechanischen Elements verbunden ist.

14. Neigbares Fahrzeug nach mindestens einem der vorhergehenden Ansprüche, **dadurch gekennzeichnet, dass** es Blockiermittel enthält, die aus zwei beweglichen Teilen (50, 60) und zwei feststehenden Teilen (51, 61) und einem zwischen den beiden beweglichen Teilen (50, 60) angeordneten, auf einem Rahmen (53) befestigten Spreizsystem (52) bestehen, um die Blockierung der Relativbewegung der Führungsplatte (3) in Bezug auf den Bogen (6) zu gewährleisten.

15. Neigbares Fahrzeug nach mindestens einem der vorhergehenden Ansprüche, **dadurch gekennzeichnet, dass** der Rahmen am vorderen Teil zwei quer verlaufende Platten (80, 81) oder röhrenförmige Strukturen aufweist, die parallel zueinander und parallel zur Lenksäule (92) stehen, wobei die Achsen der Querlenker zwischen die besagten beiden Platten oder röhrenförmigen Strukturen montiert werden.

16. Neigbares Fahrzeug nach dem vorhergehenden Anspruch und nach Anspruch 2, **dadurch gekennzeichnet, dass** besagte Führungsbahn mit besagten Platten fest verbunden ist.

17. Neigbares Fahrzeug nach Anspruch 1, **dadurch gekennzeichnet, dass** der mit dem Rahmen fest verbundene Bogen (1000) drei Flügel aufweist, unter anderem einen oberen Flügel (1001) mit ziegelförmigem Grund (1002), dessen Drehmittelpunkt parallel zur Längsachse des Fahrzeugs verläuft, zwei seitliche Flügel (1010, 1020), die sich in einem Winkel von ungefähr 135° zu beiden Seiten des oberen Flügels (1001) erstrecken, eine erste Rolle (1003), die am Grund (1002) des oberen Flügels (1001) anliegt, und zwei weitere Rollen (1013, 1023), die jeweils an einem der jeweiligen Gründe (1012, 1022) der seitlichen Flügel (1010, 1020) anliegen, wobei ein Schlitten (5) aus einem Teil gebildet wird, das drei Rollen (1003, 1013, 1023) trägt, welche dessen Positionierung im Inneren des Führungsbogens (1000) und die Verbindung mit dem Aufhängungssystem, das am unteren Teil besagten Schlittens (5) befestigt wurde, gewährleistet.

## Claims

1. A tilting vehicle having a tilting front axle, comprising a deformable double parallelogram (12, 22) linking the two front wheels (10, 20) to the chassis (1, 8), and two shock absorbers (19, 29) combined with suspension springs, each linking one of the suspension arms, or one of the links rods (13, 23, 14, 24) of one of the deformable parallelograms to a common connecting plate (3), **characterized in that** said connecting plate (3) can move in translation along an arc (6) secured to the chassis (1, 8) and guiding the connecting plate (3) along a predetermined trajectory to produce a restoring torque opposing the amplification of the tilt angle of the vehicle in case of unwanted tilting when the vehicle is stopped or moving at a low speed.

2. A tilting vehicle according to claim 1, **characterized in that** said arc (6) consists of a hollow part connected to the frame and having a curved guide path cooperating with matching means connected to said connecting plate.

3. A tilting vehicle according to claim 2, **characterized in that** said matching means consists of at least two rollers freely rotating about perpendicular axes.

4. A tilting vehicle according to claim 1, **characterized in that** said arc (6) consists of a curved part connected to the chassis, and the outer surface of which forms a curved guide path cooperating with matching means connected to said connecting plate.

5. A tilting vehicle according to claim 4, **characterized in that** said matching means consists of a sleeve sliding around said curved part.

6. A tilting vehicle according to claim 1, **characterized in that** said arc (6) has a radius of curvature decreasing toward each end.

7. -A tilting vehicle according to claim 1, **characterized in that** said connecting plate (3) is secured to a guide carriage (5) matching a guide path provided on said arc (6).

8. A tilting vehicle according to claim 7, **characterized in that** said guide carriage (5) is provided with sets of side rollers matching the guide path and with sets of rollers positioned radially relative to the arc (5).

9. A tilting vehicle according to claim 1, **characterized in that** the ends of said guide arc (6) are connected to the chassis (1) by connecting arms (7, 8) defining a window for the passage of the shock absorbers.

10. A tilting vehicle according to claim 1, **characterized in that** the arc (6) is formed by an arcuate profile having an upper guide path (611) and a lower guide path (612) which are arcuate and mutually parallel, and joined by a plane back surface (613) and by a parallel front surface, **in that** the plate (3) supports two rollers (614, 615) providing stability in the vertical plane and has two series of side rollers (616, 617) resting on at least one of the guide paths (611, 612) to guide the plate (3) along a curved trajectory, and **in that** the lower path (612) is provided with a slot for the passage of the plate (3).

11. A tilting vehicle according to claim 1, **characterized in that** it comprises means (4) for locking the relative movement of said plate relative to said arc (6).

12. A tilting vehicle according to claim 11, **characterized in that** said locking means (4) consists of at least one notched area of said plate (3), and of at least one toothed plate movable between a locking position in which it meshes with said notched area and a rest position in which it is disengaged from said plate (3).

13. A tilting vehicle according to the preceding claim, **characterized in that** said locking means is actuated by a mechanical link connected to means for actuating a mechanical member controlled by the driver.

14. A tilting vehicle according to at least one of the preceding claims, **characterized in that** it comprises locking means consisting of two movable portions (50, 60) and two stationary portions (51, 61) and a spacer system (52) positioned between the two movable portions (50, 60) and attached to a frame (53) for locking the relative movement of the connecting plate (3) relative to the arc (6).

15. A tilting vehicle according to at least one of the preceding claims, **characterized in that** the chassis has, at the front part thereof, two transverse plates (80, 81) or tubular structures parallel to each other and to a steering column (92), with the axes of the suspension arms being mounted between said two plates or tubular structures.

16. A tilting vehicle according to the preceding claim and claim 2, **characterized in that** said guide path is secured to said plates.

17. A tilting vehicle according to claim 1, **characterized in that** the arc (1000) secured to the chassis has three lobes, among which an upper lobe (1001), the bottom of which is tile-shaped, the center of rotation of which is parallel to the longitudinal axis of the vehicle, with two side lobes (1010, 1020) extending with an angle of about 135° on either side of the upper lobe (1001), with a first roller (1003) resting on the bottom (1002) of the upper lobe (1001) and two other rollers (1013, 1023) respectively resting on each one of the respective bottoms (1012, 1022) of the side lobes (1010, 1020), with a carriage (5) being formed by a part supporting the three rollers (1003, 1013, 1023) securing the positioning thereof inside the guide arc (1000) and the connection with the suspension system being attached to the lower portion of said carriage (5).
